# EUROPEAN PATENT APPLICATION

(11) **EP 2 896 295 A1**
(43) Date of publication of application: **22.07.2015**
(21) Application number: 15151082.3
(22) Date of filing: 14.01.2015
(51) Int. Cl.: A23C 23/00, A23L 1/05, A23L 1/236, A23L 1/00, A23L 2/39, A23L 1/09, A23L 1/187

(54) **Yogurt instant substitute**

(30) Priority: 15.01.2014 IT MI20140040
(71) Applicant: Sala, Stefano, 38100 Trento (IT)
(72) Inventor: Sala, Stefano, 38100 Trento (IT)
(74) Representative: Long, Giorgio

(57) **Abstract**

The present invention relates to a powder composition which comprises at least one acid, at least one sweetener and yoghurt aroma and a method for obtaining an instant product with the organoleptic characteristics of yoghurt. A further aspect of the present invention relates to the product obtained with the process described here.

## Description

The present invention describes a composition which comprises at least one acid, at least one sweetener and a yoghurt aroma and a method for obtaining an instant product with the organoleptic characteristics of yoghurt. A further aspect of the present invention relates to the product obtained using the method described here.

### State of the art

Yoghurt is a food with a viscose consistency and acidulous taste derived from milk which, thanks to the inoculation of specific milk ferments and to their proliferation, undergoes a fermentation process during which the lactose contained in the milk is transformed into lactic acid and the casein is denatured. The denaturation of the casein determines its coagulation which gives the product its characteristic increased viscosity.

Under Italian legislation, for a fermented milk to be called yoghurt, it must contain two specific bacterial strains: *Lactobacillus bulgaricus* and *Streptococcus thermophilus.* These bacteria are not resistant to the acidic environment of the stomach.

The well-known nutritional properties of yoghurt as well as its organoleptic characteristics make it a pleasant snack to consume in a variety of situations.

However, yoghurt, inasmuch as perishable, must be kept refrigerated at a temperature of 4°C. The expiry date of the yoghurt is calculated according to the presence of the milk ferments contained in it: the earlier the product is consumed, the higher the concentration thereof. Italian law does not establish a minimum quantity of live ferments to be guaranteed in yoghurt. However, there is a voluntary UNI standard which states that yoghurt, up to its expiry date, must contain at least 10^7 CFU/g of the two enzymes *Lactobacillus bulgaricus* and *Streptococcus thermophilus,* one of which must be at least equal to 10^6 CFU/g. Current legislation does not establish the duration of the product, but requires that at the moment of consumption the yoghurt complies with a set of parameters relating to chemical, physical and microbiological characteristics; normally the expiry date is between 35 and 50 days after production. Yoghurt stored at room temperature even for a few hours loses many of its nutritional and organoleptic characteristics. After a few hours at room temperature, in fact, the milk ferments of the yoghurt break down and the product becomes acidic.

The storage conditions severely limit the use of yoghurt to the home environment. In fact, yoghurt is eaten at home for breakfast or a snack, but is not the chosen snack for consuming while practising sports, travelling or at work.

Lactose intolerance is perhaps the most common symptomatic manifestation of a lack of a normal intestinal enzyme, lactase, which is responsible for separating the lactose into its two sugars, glucose and galactose, and permitting their absorption and use by the body. Lactose is the main sugar found in milk. The fermentation of the lactose performed by ferments contained in the yoghurt leads to a reduction of the lactose content in yoghurt compared to milk. For this reason and on account of the positive action of bacterial lactase on the digestion of sugar, yoghurt can normally be eaten by those complaining of slight lactose intolerance, while in more serious cases its use is contraindicated.

In addition, the most common food allergies are to some of the proteins contained in milk. The allergic reactions are caused mainly by beta-lactoglobulin and, to a lesser extent, also by casein. In yoghurt the protein structure does not change so that the consumption of yoghurt also induces adverse reactions in the presence of allergies to milk proteins.

The need is felt to have a product with the organoleptic characteristics of yoghurt which can also be eaten by subjects highly intolerant to lactose or allergic to milk proteins.

Increasing importance is attributed to probiotics, microorganisms safe for use in humans which, unlike *Lactobacillus bulgaricus* and *Streptococcus thermophilus,* remain active and vital in the intestine in an amount and for a time such as to justify the possible beneficial effects observed in validity studies. Probiotic microorganisms are able to persist and multiply in the human intestine and confer a physiological benefit.

The need is felt to make probiotics available in such a form as to make them easy and pleasant to administer.

### Summary of the invention

The present invention surprisingly makes available a composition and a method for obtaining an instant product with the organoleptic characteristics of yoghurt. The composition of the present invention thus makes available a product having the organoleptic characteristics of yoghurt in any situation. The product obtained, in one embodiment, is also completely lactose-free, and therefore suitable for subjects with strong lactose intolerance. In a further embodiment, said product does not contain milk proteins and is therefore suitable in the presence of allergies to milk proteins. In a further aspect of the present invention, the product comprises probiotics.

### Detailed description of the invention:

The present invention describes a composition and a method for extemporaneously obtaining a product with the organoleptic characteristics of yoghurt. The present invention also relates to the product obtained by means of the method described here.

The composition of the present invention comprises at least one acid, at least one sweetener and a yoghurt aroma.

The aroma is a substance that confers a sensory characteristic to a food, resulting from the combination of smell and taste. The typical aroma of a food is given by specific chemical substances naturally present in it. Such substances may possibly be synthesised chemically and added to strengthen or replace such natural substances. The aroma typical of yoghurt is given by the lactic acid which gives a typical "fresh" flavour and by a mixture of carbonyl compounds comprising acetone, butyric acid, acetoin, diacetyl and acetaldehyde.

In the composition claimed here, said at least one acid is present in amounts such that when 1 g of said composition is diluted in 1 litre of water, the pH of the solution is between 3 and 6, preferably between 4 and 5.

Said at least one acid is selected from one or more acids of the group comprising adipic acid, ascorbic acid, citric acid, hydrochloric acid, lactic acid, sulphuric acid, gluconic acid, glucono delta lactone, stearic acid, succinic acid, tartaric acid, glutamic acid, guanylic acid, inosinic acid, cholic acid. In a preferred embodiment, said at least one acid is citric acid.

Said one or more sweetener is selected from the group comprising: molasses, apple juice concentrate, grape juice concentrate, stevioside, honey, rice, maple, sorghum syrup, agave juice, sucrose, fructose, glucose, sorbitol, xilitol, mannitol, glycine, lactose, monellin, erythritol, acesulfame potassium, aspartame, saccharin, sucralose, maltitol, isomalt, ciclamate, neohesperidin dihydrochalcone, naringin dihydrochalcone. Preferably, said sweetener is sucralose.

Said composition may also comprise one or more additional aromas, colourings, fillers, stabilisers and/or thickeners.

Said one or more additional aromas are preferably chosen from the group comprising: acetaldehyde, diacetyl, benzaldehyde, anethole, γ-nonalactone, eugenol, menthol, eucalyptol, thymol, diacetyl and butyric acid C4, L-carvone, vanillin or ethyl vanillin, bis-methylthio-methane, 2-ethyl methyl butyrate, ethyl butanoate, ethyl acetacetate, amyl acetate, fenchone, apioo, 2-furylmethanthiol, α-furfuryl mercaptane, β-damascenone, 2,3,5,6-tetramethylpyrazine, phenylacetic acid, ethyl phenylacetate, γ-undecalactone, allyl capronate, frambinone, ethyl cinnamate, 2-ethyl methyl butanoate, 3-methyl-thio-propanol, diallyl disulphide, allylpropyl disulphide, 2-methoxy-5-methylpirazine, 2-epthanol, 1-octen-3-olo, valerianic acid, isobutyric, 2-heptanone, 2-methylthiobutyrate, trimethylamine, methyl-2-peridilchetone, ethyl-3-hydroxybutanoate, linalyle acetate, phenylethanol, α-ionone, pyroligneous acid, hexanal, furaneol, 2-methoxy-3-methylpirazine.

Said colourings are preferably selected from the group comprising: curcumin, riboflavin, riboflavin-5'-phosphate, tartrazine, quinoline yellow, fast yellow ab, riboflavin-5-phosphate sodium salt, yellow 2g, yellow orange s, orange ggn, cochineal, carminic acid, carmine, natural red 4, azorubin (carmoisin), amaranth, fd&c red 2, cochineal red, erythrosine, fd&c red 3, allura red, fd&c red 40, indanthrene blue rs, patent blue v, indigotine, fd&c blue 2, brilliant blue fcf, fd&c blue 1, chlorophyll and chlorophyllin, complexes of chlorophyll and copper, green s, caramel, caustic sulphite caramel, ammonia caramel, sulphite ammonia caramel, brilliant black, carbon black, vegetable carbon, brown fk, kipper brown, brown ht, chocolate brown ht, α-carotene, B-carotene, γ-carotene, annatto, bixin, norbixin, pepper extract, lycopene, B-apo-8'-carotenal (c30), ethyl ester of β-apo-8'-carotenic acid(c30), flavoxanthin, lutein, kryptoxanthin, rubixanthin, violaxanthin, rhodoxanthin, canthaxanthin, zeaxanthin, betanine, anthocyanins, calcium carbonate, chalk, titanium dioxide, oxides and hydroxides of iron, aluminium, silver, gold, rubine, tannin.

Fillers, stabilisers and/or thickeners are by way of example, alginic acid, sodium alginate, potassium alginate, ammonium alginate, calcium alginate, agar, carrageenan, cellulose, carboxy methyl cellulose, algae processed eucheuma, carob seed flour, guar gum, tragacanth gum, acacia gum (gum arabic), xanthan gum, karaya gum, tara gum, gellan gum, starch, dextrose, polydextrose, maltodextrin, FOS, inulin, soluble fibres or other additives known to the persons skilled in the art.

In a further embodiment, said composition also comprises probiotics. Common probiotic strains are for example *Lactobacillus johnsonii, Lactobacillus casei, Bifidobacterium lactis, Lactobacillus rhamnosus, Saccharomyces boulardii, Bacillus clausii, Lactobacillus paracasei, Bifidobacterium bifidum, Lactococcus lactis, Lactobacillus salivarius.* In a preferred embodiment, said composition comprises *Lactobacillus* and *Bifidobacterium* for a total of at least 0.2 + 0.2 billion per dose of 1.5g, preferably at least 0.5 + 0.5 billion, even more preferably at least 1 + 1 billion per dose of 1.5 g.

Preferably, said composition is in powder form.

In a preferred embodiment, said composition comprises anhydrous citric acid in an amount between 30 and 99% (weight/weight), an amount of sweetener comprised between 0.05 and 10% (weight/weight) and yoghurt aroma between 0.05 and 30% (weight/weight).

Even more preferably, said composition comprises, by weight, 70-99% of anhydrous citric acid, 0.1 - 1% of a sweetener 0.1 - 30% yoghurt aroma.

In a preferred embodiment, said composition comprises:
anhydrous citric acid 60-70% (weight/weight)
sucralose 0.7% (weight/weight)
yoghurt aroma 20-30% (weight/weight)
mixture of rubbers 0.1 to 10% (weight/weight) where said mixture of rubbers comprises: 35 - 45%
(weight / weight) carboxy methyl cellulose, 20 - 30% guar gum, 3-7% xanthan gum.

In a further preferred embodiment, said composition consists of:
anhydrous citric acid 79.2% (weight/weight)
sucralose 1.0% (weight/weight)
yoghurt aroma 19.8% (weight/weight)

The present invention further relates to a method for obtaining an instant product with the organoleptic characteristics of yoghurt which comprises:
- providing a composition that comprises at least one acid, at least one sweetener, a yoghurt aroma, where said at least one acid is present in an amount such that when 1 g of said composition is dissolved in 1 litre of water, the pH of the solution is between 3 and 6, preferably between 4 and 5;
- providing a milk, selected from the group comprising cow, sheep, goat, camel, donkey, rice, soy, oat or almond milk;
- adding said composition to the milk;
- stirring for a time between 10 seconds and 180 minutes, preferably between 2 and 180 minutes, preferably between 5 and 60 minutes at room temperature.

In a preferred embodiment, said method uses a composition that comprises at least one acid, at least one sweetener and yoghurt aroma according to the present description.

The invention also relates to the product obtained with the method described herein when applied to the composition of the present invention.

### EXAMPLES:

Example 1 obtaining a product with the organoleptic characteristics of yoghurt made from rice milk, full cream cow's milk, semi-skimmed cow's milk, skimmed cow's milk, soy milk, light soy milk or full cream cow's milk low in lactose.

1g of a composition consisting of anhydrous citric acid 99.8% (weight/weight) sucralose 0.1% (weight / weight), yoghurt aroma 0.1% (weight/weight) was added to 100 ml of rice milk. The mixture was kept stirred at room temperature and at subsequent intervals the following parameters were measured: pH, density, dynamic viscosity, kinematic viscosity.

Measurement methods:
pH: using an Orion pH-meter model 420. After calibrating the pH meter at 3 pH levels (4.00-7.00-10.00 pH units) the sample is read.
Viscosity: a Tecnovetro bubble viscometer is used. The time it takes the sample to flow along the capillary between one notch and the other of the bubble is evaluated. Table 1 shows the dynamic viscosity and the kinematic viscosity, where the dynamic viscosity takes into account the density of the sample and the time taken by the same to flow along the capillary, and the kinematic viscosity takes into account only the time taken by the sample to flow along the capillary. Density: a Tecnovetro Quevenne milk hydrometer is used. 500ml of milk are placed in a cylinder of 500ml. The milk hydrometer is immersed in the milk and the density value, expressed in g/ml, is read off directly using the graduated scale. The sample is at a temperature of 20°C.

### Preparation of the sample

The tests described above were carried out on the sample of milk as it is and on the sample to which 1 g of product per 100 ml of milk had been added. Before each reading the sample was heated to a temperature of 20°C. The same experiment was repeated varying the milk used: full cream cow's milk, semi-skimmed cow's milk, skimmed cow's milk, soy milk, light soy milk, full cream cow's milk low in lactose. The results measured in the various samples at successive times are shown in Table 1 below:

**Table 1:**

| **Tvpe of milk (specimen no.)** | **Times** | **pH (unit)** | **Density (g/ml)** | **Viscosity (millipascal*S)** | **Kinematic Viscosity (mm2*s-1)** |
|---|---|---|---|---|---|
| **Rice milk (1320037-001)** | T=0 | 5.76 | 1.039 | 1.70 | 1.64 |
| | T=1 (after 5 mins) | 2.50 | 1.042 | 1.74 | 1.67 |
| | T=2 (after 15 mins) | 2.43 | 1.042 | 1.74 | 1.67 |
| | T=3 (after 30 mins) | 2.40 | 1.041 | 1.76 | 1.69 |
| | T=4 (after 60 mins) | 2.41 | 1.045 | 1.77 | 1.69 |
| **Full cream cow's milk (1320037-002)** | T=0 | 6.54 | 1.027 | 2.09 | 2.03 |
| | T=1 (after 5 mins) | 3.81 | 1.030 | 30.2 | 29.3 |
| | T=2 (after 15 mins) | 3.85 | 1.030 | 30.7 | 29.6 |
| | T=3 (after 30 mins) | 3.81 | 1.029 | 27.1 | 26.3 |
| | T=4 (after 60 mins) | 3.85 | 1.031 | 33.0 | 32.0 |
| **Semi-skimmed cow's milk (1320037-003)** | T=0 | 6.59 | 1.028 | 1.74 | 1.69 |
| | T=1 (after 5 mins) | 3.91 | 1.036 | 9.93 | 9.59 |
| | T=2 (after 15 mins) | 3.92 | 1.037 | 11.0 | 10.6 |
| | T=3 (after 30 mins) | 3.93 | 1.035 | 10.8 | 10.5 |
| | T=4 (after 60 mins) | 3.93 | 1.038 | 11.3 | 10.9 |
| **Semi-skimmed cow's milk (1320037-004)** | T=0 | 6.66 | 1.030 | 1.03 | 1.78 |
| | T=1 (after 5 mins) | 3.96 | 1.038 | 11.4 | 11.0 |
| | T=2 (after 15 mins) | 3.93 | 1.037 | 11.7 | 11.3 |
| | T=3 (after 30 mins) | 3.95 | 1.034 | 10.8 | 10.4 |
| | T=4 (after 60 mins) | 3.91 | 1.035 | 11.3 | 10.9 |
| **Skimmed cow's milk (1320037-005)** | T=0 | 6.66 | 1.030 | 1.83 | 1.78 |
| | T=1 (after 5 mins) | 3.96 | 1.038 | 11.4 | 11.0 |
| | T=2 (after 15 mins) | 3.93 | 1.037 | 11.7 | 11.3 |
| | T=3 (after 30 mins) | 3.95 | 1.034 | 10.8 | 10.4 |
| | T=4 (after 60 mins) | 3.91 | 1.035 | 11.3 | 10.9 |
| **Soya milk (1320037-006)** | T=0 | 7.14 | 1.020 | 2.58 | 2.53 |
| | T=1 (after 5 mins) | 4.02 | 1.025 | 7.17 | 7.00 |
| | T=2 (after 15 mins) | 4.00 | 1.027 | 9.20 | 8.96 |
| | T=3 (after 30 mins) | 4.02 | 1.033 | 9.77 | 9.46 |
| | T=4 (after 60 mins) | 3.99 | 1.031 | 8.60 | 8.34 |
| **Light soya milk (1320037-007)** | T=0 | 7.03 | 1.009 | 2.39 | 2.37 |
| | T=1 (after 5 mins) | 3.63 | 1.010 | 5.15 | 5.10 |
| | T=2 (after 15 mins) | 3.63 | 1.023 | 5.46 | 5.33 |
| | T=3 (after 30 mins) | 3.53 | 1.020 | 4.70 | 4.61 |
| | T=4 (after 60 mins) | 3.55 | 1.022 | 5.18 | 5.06 |
| **Cow's milk with low lactose content (1320037-008)** | T=0 | 6.64 | 1.021 | 1.82 | 1.79 |
| | T=1 (after 5 mins) | 3.70 | 1.032 | 9.18 | 8.90 |
| | T=2 (after 15 mins) | 3.81 | 1.033 | 8.87 | 8.59 |
| | T = 3 (after 30 mins) | 3.82 | 1.035 | 9.42 | 9.10 |
| | T=4 (after 60 mins) | 3.79 | 1.039 | 9.88 | 9.51 |

## Claims

1. Composition in powder which comprises at least one acid, at least one sweetener and a yoghurt aroma where said at least one acid is present in an amount such that, when 1 g of said composition is diluted in 1 litre of water, the pH of the solution is between 3 and 6, preferably between 4 and 5;
where said at least one acid is selected from the group comprising adipic acid, ascorbic acid, citric acid, hydrochloric acid, lactic acid, sulphuric acid, gluconic acid, glucono delta lactone, stearic acid, succinic acid, tartaric acid, glutamic acid, guanylic acid, inosinic acid, cholic acid;
said at least one sweetener is selected from the group comprising: molasses, apple juice concentrate, grape juice concentrate, stevioside, honey, rice, maple, sorghum syrup, agave juice, sucrose, fructose, glucose, sorbitol, xilitol, mannitol, glycine, lactose, monellin, erythritol, acesulfame potassium, aspartame, saccharin, sucralose, maltitol, isomalt, ciclamate, neohesperidin dihydrochalcone, naringin dihydrochalcone.

2. Composition according to claim 1, which comprises anhydrous citric acid 30 - 99% weight/weight; at least one sweetener in an amount between 0.05 and 10% weight/weight and yoghurt aroma in an amount between 0.05 and 30% weight/ weight.

3. Composition according to claim 1 or 2, which comprises anhydrous citric acid 70 - 99% weight/weight; at least one sweetener in an amount between 0.1 and 1% weight/weight and yoghurt aroma in an amount between 0.1 and 30% weight/ weight.

4. Composition according to one of the claims from 1 to 3 which also comprises one or more additional aromas, colourings, fillers, stabilisers and/or thickeners, preferably selected from alginic acid, sodium alginate, potassium alginate, ammonium alginate, calcium alginate, agar, carrageenan, cellulose, carboxy methyl cellulose, processed *Eucheuma* algae, carob seed flour, guar gum, tragacanth gum, acacia gum (gum arabic), xanthan gum, karaya gum, tara gum, gellan gum, starch, dextrose, polydextrose, maltodextrin, FOS, inulin, soluble fibres.

5. Composition according to one of the claims from 1 to 4 which also comprises probiotic strains selected from the group comprising: *Lactobacillus johnsonii, Lactobacillus casei, Bifidobacterium lactis, Lactobacillus rhamnosus, Saccharomyces boulardii, Bacillus clausii, Lactobacillus paracasei, Bifidobacterium bifidum, Lactococcus lactis, Lactobacillus salivarius.*

6. Composition according to one of the claims 1 to 2 which comprises:
anhydrous citric acid 60-70% (weight/weight) sucralose 0.7% (weight/weight) yoghurt aroma 20-30% (weight/weight) a mixture of rubbers 0.1 to 10% (weight/weight) where said mixture of rubbers comprises: 35 - 45% (weight/weight) carboxy methyl cellulose, 20 - 30% guar gum, 3-7% xanthan gum.

7. Composition according to one of the claims from 1 to 5 which consists of:
anhydrous citric acid 79.2% (weight/weight) sucralose 1.0% (weight/weight) yoghurt aroma 19.8% (weight/weight)

8. Use of a composition according to one of the claims from 1 to 7 for the extemporaneous preparation of a product with the organoleptic characteristics of yoghurt.

9. Method for the preparation of a product with the organoleptic characteristics of yoghurt which comprises:
- providing a composition that comprises at least one acid, at least one sweetener, a yoghurt aroma, where said at least one acid is present in an amount such that, when 1 g of said composition is dissolved in 1 litre of water, the pH of the solution is between 3 and 6, preferably between 4 and 5;
- providing a milk, selected from the group comprising cow, sheep, goat, camel, donkey, rice, soy, oat or almond milk;
- adding said composition to the milk;
- stirring for a time between 10 seconds and 180 minutes, preferably between 2 and 180 minutes, preferably between 5 and 60 minutes at room temperature.

10. The product having the organoleptic characteristics of yoghurt obtained according to the following method:
- providing a composition that comprises at least one acid, at least one sweetener, a yoghurt aroma, where said at least one acid is present in an amount such that, when 1 g of said composition is dissolved in 1 litre of water, the pH of the solution is between 3 and 6, preferably between 4 and 5;
- providing a milk, selected from the group comprising cow, sheep, goat, camel, donkey, rice, soy, oat or almond milk;
- adding said composition to the milk;
- stirring for a time between 10 seconds and 180 minutes, preferably between 2 and 180 minutes, preferably between 5 and 60 minutes at room temperature.
